# EUROPÄISCHE PATENTSCHRIFT

(11) **EP 0 961 839 B1**
(45) Veröffentlichungstag und Bekanntmachung des Hinweises auf die Patenterteilung: **29.08.2001**
(21) Anmeldenummer: 98912238.7
(22) Anmeldetag: 10.02.1998
(51) Int. Cl.: C21C 5/52, F27B 3/22

(54) **VERFAHREN UND EINRICHTUNG ZUM POSITIONIEREN DER MÜNDUNG EINER VERZEHRBAREN LANZE**
METHOD AND DEVICE FOR POSITIONING THE MOUTH OF A CONSUMABLE LANCE
PROCEDE ET DISPOSITIF POUR POSITIONNER L'EMBOUCHURE D'UNE LANCE CONSOMMABLE

(30) Priorität: 12.02.1997 DE 19707319
(43) Veröffentlichungstag der Anmeldung: 08.12.1999
(73) Patentinhaber: SMS Demag AG, 40237 Düsseldorf (DE)
(72) Erfinder: FEUERSTACKE, Ewald, D-46282 Dorsten (DE)
(74) Vertreter: Meissner, Peter E., Dipl.-Ing.
(86) Internationale Anmeldenummer: DE9800442
(87) Internationale Veröffentlichungsnummer: WO9836101

(56) Entgegenhaltungen:
- EP-A- 0 564 432
- EP-A- 0 725 150
- WO-A-89/06706
- US-A- 3 223 520
- US-A- 3 459 867
- US-A- 4 986 847

## Beschreibung

Die Erfindung betrifft ein Verfahren zum Positionieren der Mündung einer verzehrbaren, zur Förderung von gasförmigen und/oder festen Medien ausgestalteten Lanze in einem mit flüssigem Metall, insbesondere Stahl, gefüllten metallurgischen Gefäß, und einer Einrichtung zur Durchführung des Verfahrens.

Verzehrbare Lanzen werden zum Aufblasen von Gas und/oder Kohlepartikeln eingesetzt.

Aus EP 0 723 129 A2 ist ein Lichtbogenofen bekannt, bei dem durch die Ofengefäßwand sowohl fest installierte wie auch in ihrer Position verstellbare Lanzen geführt sind und mit denen die verschiedensten Medien auf oder in die Schmelze eingebracht werden. Ein Manipulator, der die verstellbare Lanze in eine Warteposition und in eine Betriebsposition verfahren kann, ist hier nicht weiter erwähnt.

Aus DE 40 34 809 ist eine Vorrichtung zur Manipulation der Sauerstoff- und/oder Kohleeinblaslanzen, insbesondere vor einem Lichtbogenofen, bekannt. Diese Vorrichtung weist einen Turm mit Tragarm auf und Bauteile, mit denen die unterschiedlich ausgebildeten Lanzen einschließlich der Zuführschläuche bewegt werden können.

In nachteiliger Weise erfordert ein solcher Manipulator eine Ofenbühne mit relativ umfangreichen Bewegungsfreiraum. Zur Positionierung der Lanzenspitze ist ein aufwendiges und technisch kompliziertes Handhabungsgerät erforderlich. Zur Erreichung definierter Position sind eine Vielzahl von Bewegungen des Manipulators erforderlich einschließlich der Änderung des Standortes des Gerätes selber.

Zum Einsatz kommen Lanzen von vorgebbarer Länge, die nach ihrem Abbrand auf eine zulässige Länge durch neue ersetzt werden.

Die Erfindung hat sich das Ziel gesetzt, ein Verfahren und eine Einrichtung zum Positionieren der Mündung einer verzehrbaren Lanze zu schaffen, bei dem die o.g. Nachteile vermieden werden und bei dem mit einfachen Mitteln bei einem Minimum von Materialeinsatz ein beliebiges Positionieren der Lanzenspitze möglich ist bei besonders geringem Platzverbrauch auf der Ofenbühne.

Erreicht wird dieses Ziel durch die Merkmale des Verfahrensanspruches 1 sowie des Vorrichtungsanspruches 7. Die übrigen Ansprüche sind vorteilhafte Weiterbildungen der Erfindung.

Erfindungsgemäß wird die Lanze im wesentlichen tangential zum Ofengefäß in einer Ebene oberhalb des Flüssigkeitspegels geführt. Im Ofengefäß ist für die Lanze eine relativ kleine Öffnung, insbesondere eine in vertikale Richtung weisende schlitzförmige Öffnung vorgesehen. Außerhalb des Ofengefäßes in der Nähe des Ofendurchtritts wird die Lanze so gebogen, daß ihr vorderer Bereich durch die Ofenwand hindurch in das Ofeninnere ragt.

Durch einfache Einflußnahme auf die Drehachse des im wesentlichen außerhalb des Ofens befindlichen geraden Teils des Rohres sowie auf die Veränderung des Biegeradius und die Nachschiebgeschwindigkeit läßt bei einem großen Bereich im Ofeninneren die Mündung der Lanze positionieren.

In Abhängigkeit vom Abbrand der Lanze läßt sich rechtzeitig in den Produktionspausen ein neues Lanzenstück zwischen Schlauch und Restlanze anbringen. Auf diese Weise entsteht quasi eine Endloslanze, wobei die einzelnen Lanzenteile jeweils vollständig aufgebraucht werden.

In vorteilhafter Weise kann auf die Lanze im Biegebereich eine Kraft aufgebracht werden, die eine elastische Verbiegung bewirkt. Wird gesteuert die Biegekraft zurückgenommen, so bewegt sich die Mündung der Lanze elastische in die gewünschte Position.

Im Bedarfsfall kann diese Kraft auch in einer solchen Höhe aufgebracht werden, daß zur Erzielung eines vorgebbaren Radius eine plastische Verformung des Rohrendstückes bewirkt wird.

Die einzelnen Rohrstücke werden im wesentlichen durch Muffen oder durch direktes Verbindungsschweißen zusammengefügt. In vorteilhafter Weise wird diese Verbindungsstelle geschont durch eine Überwachung und ein Zurücknehmen der Biegekraft auf ein vorher bestimmtes zulässiges Maß.

Die Biegeeinrichtung besteht im wesentlichen aus drei Rollen, die zu beiden Seiten sich gegenüberliegend an der Lanze vorgesehen sind. Darüber hinaus sind insbesondere im geraden Teil der Lanze weitere Führungs- und/oder Antriebsrollen angeordnet.

Zum Verbiegen der Lanze in dem Bereich vor der Ofenwanddurchtrittsöffnung ist mindestens eine der Rollen verfahrbar, und zwar die letzte und/oder die vorletzte Rolle in Lanzen-Vorschubrichtung. Eine vorteilhafte Ausgestaltung der Verschiebeeinheit bildet der Einsatz einer hydraulischen Kolben-Zylinder-Einheit. Durch die Verwendung von nicht entflammbaren Flüssigkeiten besteht die Möglichkeit, ein solches konstruktiv einfaches Bauteil besonders nah in den Bereich der Ofendurchtrittsöffnung anzuordnen.

Weiterhin wird vorgeschlagen, die Lanzenbiege- und Treibeinrichtung auf einer Plattform anzuordnen. Diese Plattform wird kippbar und/oder schwenkbar ausgestaltet und läßt in besonders einfacher Weise mit angepaßten Treibelementen ein beliebiges Positonieren der Lanze wie auch ein einfaches Entfernen vom Ofen durchführen. Die Schwenkachse dieser Plattform wird vorzugsweise so angeordnet, daß eine gedachte Linie in das Ofengefäß an der Stelle die Ofenwand schneidet, an der der Gefäßdurchtritt und somit auch der Durchtritt der Lanze in das Ofeninnere erfolgt. Durch diese Ausgestaltung wird es möglich, die bereits verbogene Lanze so zu bewegen, daß sich die Lanze in der Durchtrittsöffnung um einen Punkt bewegt mit der Folge, daß nur ein besonders kleines Loch in der Ofenwand erforderlich ist. Solch eine geringe Öffnung läßt sich mit einfachen Mitteln abdichten.

Zum Erfassen der Biegekraft zum elastischen und/oder plastischen Verformen des Lanzenendstückes ist eine Kraftmeßeinrichtung vorgesehen, mit der die Biegekraft definiert einstellbar ist.

Beim Einsatz von Außenmuffen zum Verbinden von zwei Rohrstücken wird eine Wegmeßeinrichtung vorgesehen, die der Biegeeinrichtung signalisiert, wann das empfindliche Verbindungsstück die Verschiebeeinheit passiert zur entsprechenden Rücknahme der Biegekraft.

Ein Beispiel der Erfindung ist in der beiliegenden Zeichnung dargelegt.

### Dabei zeigen die Figuren

- Figur 1+2: Schematische Draufsichten der Positioniereinrichtung
- Figur 3,3a: einzelne Positionen der Lanzenmündung
- Figur 4: verschiedene Rohrverbindungen bei Lanzenverlängerung

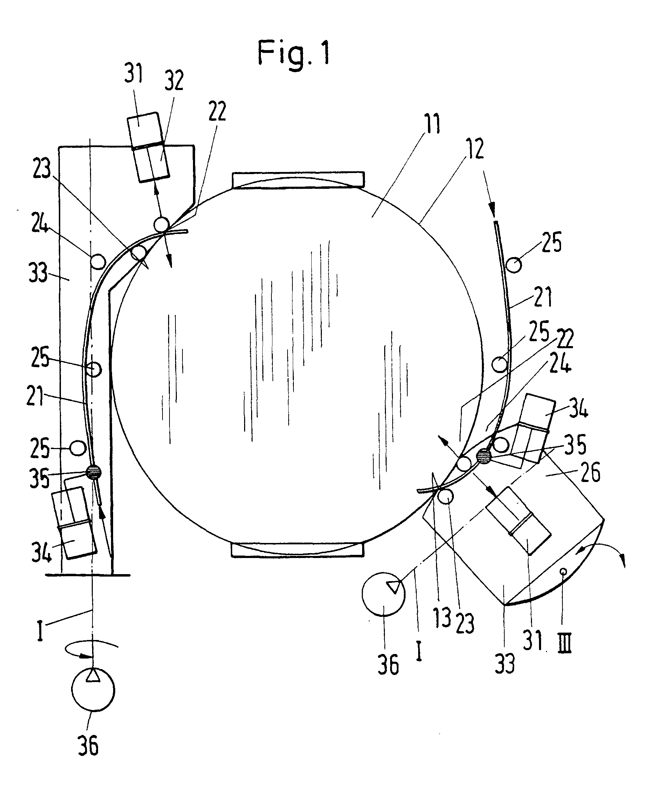

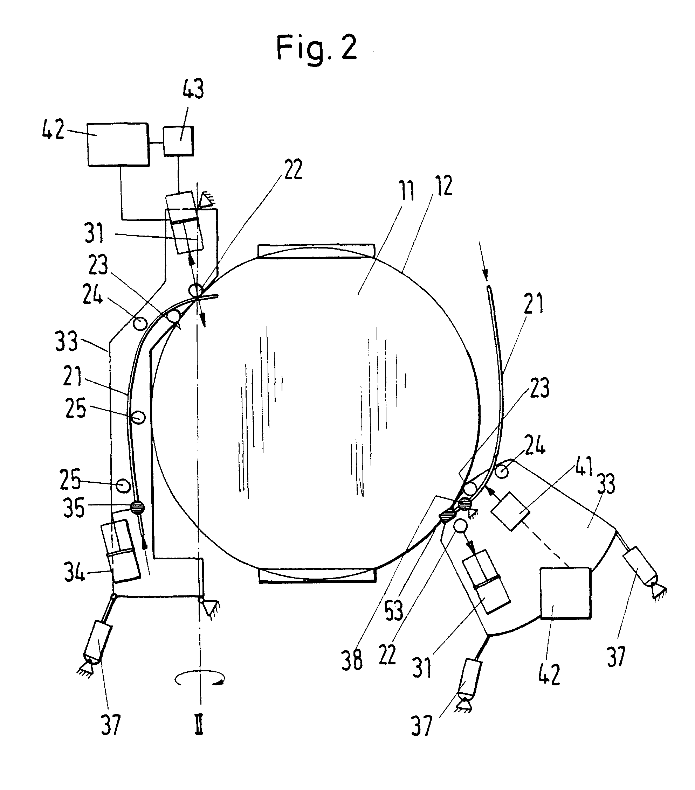

Die Figuren 1+2 zeigen ein metallurgisches Gefäß 11, bei dem seitlich eine Lanze 21 entlanggeführt wird. Im vorderen Bereich durchdringt die Lanze 21 die Wandung 12 des metallurgischen Gefäßes 11.

Die Lanze 21 wird durch Führungsrollen 25 geführt und kopfendig über Rollen 22-24 gebogen. Die Rolle 22 ist dabei an eine Verschiebeeinheit 31 angeschlossen.

Zum Nachfördern der Lanze ist eine Antriebseinheit 34 vorgesehen, die über Treibelemente 35 auf die Lanze 21 einwirkt.

Die Antriebseinheit 34 und die Verschiebeeinheit 31 sind auf einer Plattform 33 angeordnet. In der Figur 1 sind Drehantriebe vorgesehen, die die Plattform 33 um die Kippachse I bewegen. Im rechten Teil der Figur 1 ist darüber hinaus eine Schwenkachse III vorgesehen, mit der die Plattform 33 aus ihrem Arbeitsbereich herausgeschwenkt werden kann.

In der Figur 2 ist im linken Teil der Figur die Plattform 31 um eine gedachte Linie II kippbar angeordnet. Diese Linie II ist durch den Schnittpunkt der Lanze 21 mit der Gefäßwand 12 geführt. Als Kippantrieb 37 ist eine Kolben-Zylinder-Einheit vorgesehen.

Im rechten Teil der Figur 2 ist die Plattform 33 insgesamt auf drei Punkten gelagert, und zwar auf ein Gelenk 38 und zwei Kippantrieben 37. Durch diese Anordnung läßt sich die Plattform 33 um das Gelenk 38 beliebig im Raum positionieren. Die Lanzenzufuhr ist dabei so ausgestaltet, daß die Bewegung nicht behindert wird. Die freie Bewegung der Plattform 33 erlaubt ein leichtes Einstellen der Lanzenmündung.

Weiterhin ist auf der Plattform 33 im rechten Teil des Bildes eine Wegmeßeinrichtung 41 angeordnet, die mit der Lanze 21 in Verbindung steht und durch die eventuelle Verbindungsstücke der einzelnen Lanzenstücke erfaßt werden können. Die Wegmeßeinrichtung 41 ist über ein Aktuator 42 steuerungsmäßig mit der Verschiebeeinheit 31 verbunden. Wie in der Skizze angedeutet, wird die Verschieberolle 22 durch die Verschiebeeinheit 31 zurückgefahren, so lange die Muffe 53 sich in ihrem Arbeitsbereich befindet. Hierdurch wird an der Lanze ein definiertes Stück nicht verbogen.

Im linken Teil der Figur 2 ist an der Verschiebeeinheit 31 unmittelbar eine Kraftmeßstation angeschlossen, die unmittelbar eine Kraftänderung beim Verbiegen erkennt, beispielsweise im Bereich einer zwei Lanzeteile verbindenden Muffe und entsprechend die Kraft reduziert. Hierzu ist die Kraftmeßeinrichtung 43 und die Verschiebeinheit 31 mit einem Aktuator 42 verbunden.

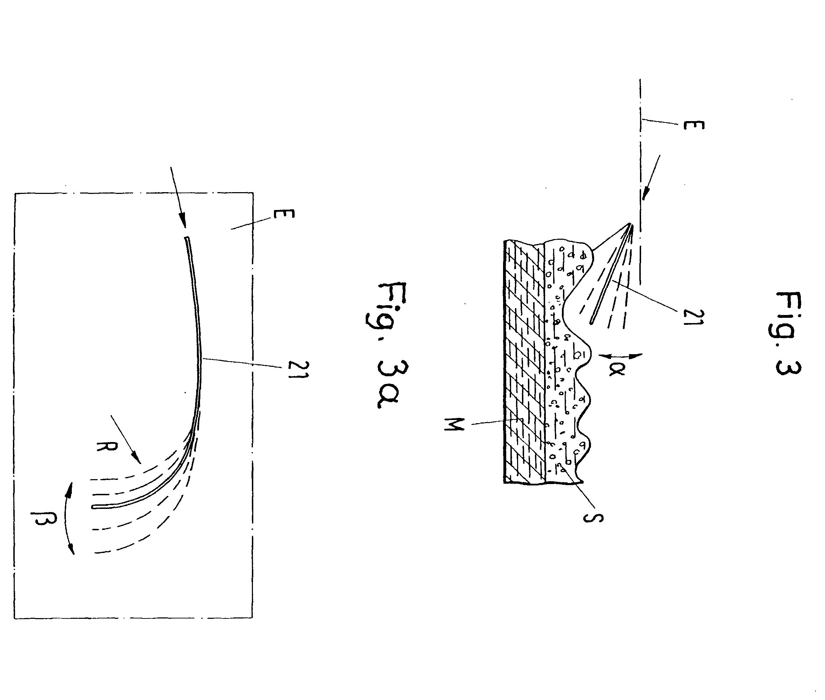

Die Figur 3 zeigt den oberen Teil einer Ebene E, die oberhalb des mit Schlacke S bedeckten Pegels des Flüssigmetalls M angeordnet ist. Skizzenhaft ist das Ende der Lanze 21 dargestellt, welche in vertikaler Richtung über fächerförmig einstellbare Winkel α veränderbar ist.

In Fig. 3a ist eine Draufsicht auf die Ebene E dargestellt mit der Lanze 21, die im vorderen Bereich in den Radien R verbiegbar ist und damit in horizontaler Richtung um fächerförmig einstellbare Winkel β veränderbar ist.

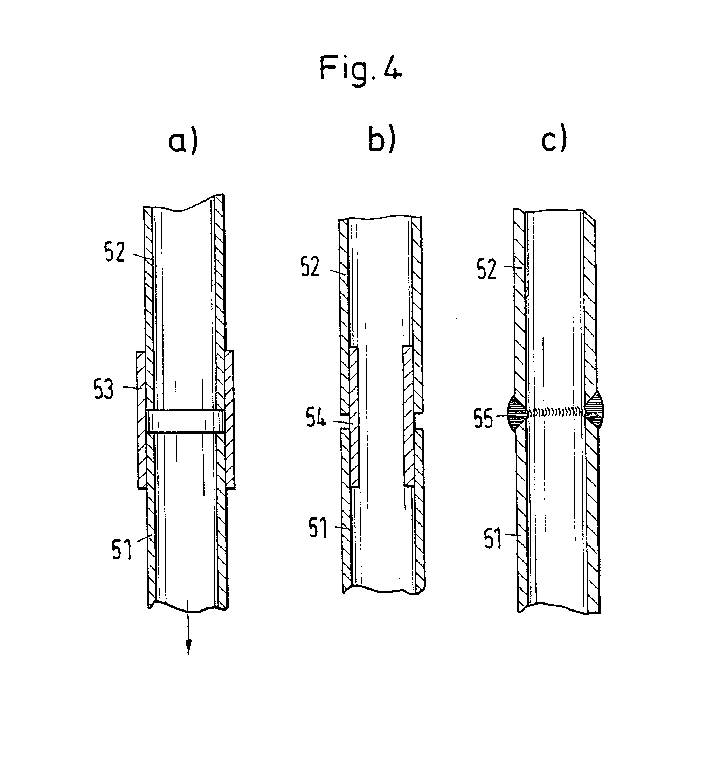

Die Figur 4 zeigt grundsätzliche Verbindungsmöglichkeiten zwischen zwei Lanzenstücken, und zwar dem Lanzenverbrauchsstück 51 und dem Lanzennachführstück 52:
a) durch eine Außenmuffe 53
b) durch eine Innenmuffe 54
c) durch eine Schweißverbindung

### Positionsliste

### Ofenanlage

- 11: Metallurgisches Gefäß
- 12: Gefäßwandung
- 13: Gefäßdurchtritt

### Lanzenführung

- 21: Lanze
- 22: Verschieberolle
- 23, 24: Biegerolle
- 25: Führungsrolle
- 26: Lanzenführungsstation
- 27: Lanzenförderstation

### Lanzeneinrichtung

- 31: Verschiebeeinheit
- 32: Lineare Krafteinheit
- 33: Plattform
- 34: Antriebseinheit
- 35: Treibelement
- 36: Drehantrieb
- 37: Kippantrieb
- 38: Gelenk

### Meßeinrichtung

- 41: Wegmeßeinrichtung
- 42: Aktuator
- 43: Kraftmeßeinrichtung

### Lanzenrohr

- 51: Verbrauchslanzenrohr
- 52: Nachführlanzenrohr
- 53: Muffe außen
- 54: Muffe innen
- 55: Schweißverbindung
- M: Flüssigmetall
- s: Schlacke
- I: Kippachse
- II: Gedachte Linie
- III: Schwenkachse
- E: Ebene
- R: Fächer Radius
- α: Fächerwinkel vertikal
- β: Fächerwinkel horizontal

## Patentansprüche

1. Verfahren zum Positionieren der Mündung einer verzehrbaren, zur Förderung von gasförmigen und/oder festen Medien ausgestalteten Lanze (21) in einem mit flüssigem Metall (M), insbesondere Stahl, gefüllten metallurgischen Gefäß(11), gekennzeichnet durch folgende Schritte:
a) die Lanze (21) wird im wesentlichen tangential zum Ofengefäß (11) in einer Ebene oberhalb des Flüssigkeitspegels des im Gefäß befindlichen Metalls geführt,
b) im Mündungsbereich der Lanze (21) wird diese außerhalb des Gefäßes (11) zum Gefäßinneren hin in vorgebbaren Radien zur fächerförmigen Positionierung der Lanzenmündung gebogen, und
c) durch die Seitenwand (12) des Ofengefäßes (11) in das Ofeninnere zur Erreichung und/oder Einhaltung der gewünschten Position der Lanzenmündung nachgeschoben.

2. Verfahren nach Anspruch 1,
dadurch gekennzeichnet,
daß vor Eintritt ins Gefäßinnere auf die Lanze (21) eine Kraft aufgebracht wird, die eine elastische Verbiegung bewirkt.

3. Verfahren nach den Ansprüchen 1,
dadurch gekennzeichnet,
daß vor Eintritt ins Gefäßinnere auf die Lanze (21) eine Kraft aufgebracht wird, die zur Erreichung des vorgebbaren Radius eine plastische Verformung des Rohrendstückes bewirkt.

4. Verfahren nach einem der Ansprüche 1 bis 3,
dadurch gekennzeichnet,
daß nach Erreichen der gewünschten Lage der Lanzenmündung die Lanze (21) in einer Geschwindigkeit in Abhängigkeit von dem Mündungsbrand nachgeschoben wird.

5. Verfahren nach Anspruch 4,
dadurch gekennzeichnet,
daß die Lanze (21) in dem Bereich vor der Biegestelle zur vertikalen Einstellung ihrer Mündung im wesentlichen um ihre Längsachse verdreht wird.

6. Verfahren nach einem der Ansprüche 1 bis 5,
dadurch gekennzeichnet,
daß die Lanze (21) aus mehreren Rohrstücken (51,52) zusammengesetzt wird, wobei die einzelnen Rohrstücke (51, 52) formschlüssig oder innig miteinander verbunden werden, und
daß während des Verschiebens der Lanze (21) ein Verbiegen der Verbindungsstellen unterbleibt.

7. Einrichtung zum Positionieren der Mündung einer verzehrbaren, zur Förderung von gasförmigen und/oder festen Medien ausgestalteten Lanze (21) in einem mit flüssigem Metall (M), insbesondere Stahl, gefüllten metallurgischen Gefäß, wobei die Lanze an Versorgungseinheiten für Gas und/oder Feststoffe angeschlossen ist, über außerhalb des Gefäßes angeordnete Führungselemente verschiebbar und durch ein Gefäßdurchtritt in das Gefäßinnere führbar ist, nach einem der Verfahrensansprüche 1 bis 6,
dadurch gekennzeichnet,
daß in einer Ebene (E) oberhalb des in das metallurgische Gefäß (11) füllbare flüssigen Metalls (M) eine mindestens drei Rollen (22-24) aufweisende LanzenFührungsstation (26) vorgesehen ist,
daß die Rollen (22-24) ein Dreieck bildend zu beiden Seiten der Lanze (21) angeordnet sind, und
daß mindestens eine der Rollen (22-24) im wesentlichen senkrecht zur Lanzenachse und parallel zur Ebene (E) verfahrbar ist.

8. Einrichtung nach Anspruch 7
dadurch gekennzeichnet,
daß die letzte und/oder die vorletzte dem metallurgischen Gefäß (11) zugewandte Rolle (22, 23) an eine Verschiebeeinheit (31) angeschlossen ist.

9. Einrichtung nach Anspruch 8
dadurch gekennzeichnet,
daß die Verschiebeeinheit (31) eine lineare Krafteinheit ist, z.B. eine hydraulische Kolben-Zylinder-Einheit (32).

10. Einrichtung nach einem der Ansprüche 7 bis 9,
dadurch gekennzeichnet,
daß die Rollen (22-25) und die Verschiebereinheit (31) auf einer Plattform (33) angeordnet sind,
daß die Plattform (33) um eine Kippachse (I) koaxial zur Längsachse des geraden Bereichs der Lanze (21) schwenkbar ist, und
daß die Kippachse auf einer gedachten Linie (II) liegt, die die Gefäßwandung (12) am Gefäßdurchtritt (13) der Lanze (21) schneidet.

11. Einrichtung nach einem der Ansprüche 7 bis 10,
dadurch gekennzeichnet,
daß unabhängig von der Lanzenführungsstation (26) eine Lanzenförderstation (27) vorgesehen ist, die an eine Antriebseinheit (34) angeschlossene Treibelemente (35) aufweist, die die Lanze (21) teilweise umfassen.

12. Einrichtung nach einem der Ansprüche 7 bis 11,
dadurch gekennzeichnet,
daß eine Wegmeßeinrichtung (41) vorgesehen ist, die den Durchmesser der Lanze (21) erfaßt und regelungstechnisch über einen Aktuator (42) mit der Verschiebeeinheit (31) verbunden ist.

13. Einrichtung nach einem der Ansprüche 7 bis 12,
dadurch gekennzeichnet,
daß die Verschiebeeinheit (31) an eine Kraftmeßeinrichtung (43) angeschlossen ist, mit der die Biegekraft der Verschiebeeinheit (31) definiert vorgebbar ist.

## Claims

1. Method for positioning the outlet of a deformable lance (21) designed for the delivery of gaseous and/or solid media into a metallurgical vessel (11) filled with molten metal (M), in particular steel, characterised by the following steps:
a) the lance (21) is guided essentially tangentially to the furnace vessel (11) in a plane above the liquid level of the metal present in the vessel,
b) in the outlet area of the lance (21), outside the vessel (11), the lance is bent in predeterminable radii inwards towards the inside of the vessel to give a fanshaped positioning of the lance outlet, and
c) the lance is introduced through the side wall (12) of the furnace vessel (11) into the interior thereof, to reach and/or maintain the desired position of the lance outlet.

2. Method according to Claim 1,
**characterised in that**
before entering the inside of the vessel a force is applied to the lance (21), which causes it to undergo elastic bending.

3. Method according to Claim 1,
**characterised in that**
before entering the inside of the vessel a force is applied to the lance (21), which plastically deforms the end section of the tube to produce the predeterminable radius.

4. Method according to any of Claims 1 to 3,
**characterised in that**
once the lance outlet has reached the desired position, the lance (21) is moved inwards at a speed that is governed by the rate at which its outlet is burned away.

5. Method according to Claim 4,
**characterised in that**
in the area before its bent section the lance (21) is rotated essentially about its longitudinal axis in order to adjust the vertical position of its outlet.

6. Method according to any of Claims 1 to 5,
**characterised in that**
the lance (21) is made up from several tube sections (51, 52), such that the individual tube sections (51, 52) are connected together in a form-locking or intimate arrangement,
and
during the displacement of the lance (21) there is no distortion of the connection points.

7. Device for positioning the outlet of a deformable lance (21) designed for the delivery of gaseous and/or solid media into a metallurgical vessel filled with molten metal (M), in particular steel, such that the lance is connected to supply units for gas and/or solids, and can be moved by virtue of guide elements arranged outside the vessel, and can be introduced into the inside of the vessel through an orifice of the vessel in accordance with any of the method of Claims 1 to 6,
**characterised in that**
in a plane (E) above the molten metal (M) that can be filled into the metallurgical vessel (11) a lance guiding station (26) is provided having at least three rolls (22-24),
the rolls (22-24) being arranged in the form of a triangle on either side of the lance (21), and
at least one of the rolls (22-24) can be moved essentially perpendicularly to the lance axis and parallel to the plane (E).

8. Device according to Claim 7,
**characterised in that**
the last and/or the penultimate roll (22, 23) facing towards the metallurgical vessel (11) is connected to a displacement unit (31).

9. Device according to Claim 8,
**characterised in that**
the displacement unit (31) is a linear force unit, for example a hydraulic piston-cylinder unit (32).

10. Device according to any of Claims 7 to 9,
**characterised in that**
the rolls (22-25) and the displacement unit (31) are arranged on a platform (33),
the platform (33) can tilt about a tilt axis (I) coaxial to the longitudinal axis of the straight portion of the lance (21), and
the tilt axis lies on a notional line (II) that intersects the wall (12) of the vessel at the orifice (13) for the lance (21).

11. Device according to any of Claims 7 to 10,
**characterised in that**
independently of the lance guiding station (26) a lance feed station (27) is provided, which comprises, connected to a drive unit (34), drive elements (35) that partially surround the lance (21).

12. Device according to any of Claims 7 to 11,
**characterised in that**
a path measurement device (41) is provided, which detects the diameter of the lance (21) and which is associated with the displacement unit (31) via an actuator (42) in a manner appropriate for control technology.

13. Device according to any of Claims 7 to 12,
**characterised in that**
the displacement unit (31) is connected to a force measurement device (43) by means of which the bending force of the displacement unit (31) can be predetermined in a defined way.

## Revendications

1. Procédé pour positionner l'embouchure d'une lance consommable (21), réalisée pour transporter des agents gazeux et/ou solides, dans un récipient métallurgique (11), rempli de métal liquide (M), en particulier de l'acier,
caractérisé par les étapes suivantes :
a) la lance (21) est guidée généralement tangentiellement au récipient de four (11) dans un plan au-dessus du niveau de liquide du métal se trouvant dans le récipient,
b) dans la zone d'embouchure de la lance (21), celle-ci est cintrée à l'extérieur du récipient (11) vers l'intérieur du récipient suivant des rayons pouvant être prédéfinis pour le positionnement en éventail de l'embouchure de la lance, et
c) avancée à travers la paroi latérale (12) du récipient de four (11) à l'intérieur du four pour atteindre et/ou conserver la position souhaitée de l'embouchure de la lance.

2. Procédé selon la revendication 1,
caractérisé en ce que, avant l'entrée dans l'intérieur du récipient, il est appliqué, sur la lance (21), une force qui exerce une déformation élastique.

3. Procédé selon la revendication 1,
caractérisé en ce que, avant l'entrée dans l'intérieur du récipient, il est appliqué, sur la lance (21), une force qui, pour atteindre le rayon pouvant être prédéfini, exerce une déformation plastique de la pièce d'extrémité tubulaire.

4. Procédé selon une des revendications 1 à 3,
caractérisé en ce que, après avoir atteint la position souhaitée de l'embouchure de la lance, la lance (21) est avancée à une vitesse dépendant de la consommation de l'embouchure.

5. Procédé selon la revendication 4,
caractérisé en ce que la lance (21) est tournée, dans la zone avant la position de cintrage, pour le réglage vertical de son embouchure généralement autour de son axe longitudinal.

6. Procédé selon une des revendications 1 à 5,
caractérisé en ce que la lance (21) est constituée de plusieurs pièces tubulaires (51, 52), les pièces tubulaires individuelles (51, 52) étant reliées ensemble par coopération de formes ou intimement, et en ce que, pendant le déplacement de la lance (21), une déformation des points de liaison n'a pas lieu.

7. Dispositif pour positionner l'embouchure d'une lance consommable (21), réalisée pour transporter des agents gazeux et/ou solides, dans un récipient métallurgique, rempli de métal liquide (M), en particulier de l'acier, la lance étant raccordée à des unités d'alimentation pour du gaz et/ou des matières solides, pouvant être déplacée par des éléments de guidage agencés à l'extérieur du récipient, et être guidée à travers une ouverture du récipient à l'intérieur du récipient, selon une des revendications de procédé 1 à 6,
caractérisé en ce que, dans un plan (E) au-dessus du métal liquide (M) pouvant remplir le récipient métallurgique (11), il est prévu un poste de guidage de lance (26) présentant au moins trois rouleaux (22 - 24), en ce que les rouleaux (22 - 24) sont agencés en formant un triangle des deux côtés de la lance (21), et en ce qu'au moins un des rouleaux (22 - 24) est déplaçable généralement perpendiculairement à l'axe de la lance et parallèlement au plan (E).

8. Dispositif selon la revendication 7,
caractérisé en ce que le dernier et/ou l'avant-dernier rouleau (22, 23), en regard du récipient métallurgique (11), est raccordé à une unité de déplacement (31).

9. Dispositif selon la revendication 8,
caractérisé en ce que l'unité de déplacement (31) est une unité de force linéaire, par exemple un vérin hydraulique (32).

10. Dispositif selon une des revendications 7 à 9,
caractérisé en ce que les rouleaux (22 - 25) et l'unité de déplacement (31) sont agencés sur une plate-forme (33), en ce que la plate-forme (33) peut pivoter autour d'un axe de basculement (I) coaxialement à l'axe longitudinal de la zone droite de la lance (21), et en ce que l'axe de basculement se trouve sur une ligne imaginaire (II), qui coupe la paroi du récipient (12) au niveau du passage du récipient (13) de la lance (21).

11. Dispositif selon une des revendications 7 à 10,
caractérisé en ce que, indépendamment du poste de guidage de la lance (26), il est prévu un poste de transport de la lance (27), qui présente des éléments moteurs (35), raccordés à une unité d'entraînement (34), qui entourent partiellement la lance (21).

12. Dispositif selon une des revendications 7 à 11,
caractérisé en ce qu'il est prévu un dispositif de mesure de course (41) qui détecte le diamètre de la lance (21) et est relié, suivant une technique de régulation, par l'intermédiaire d'un actionneur (42) à l'unité de déplacement (31).

13. Dispositif selon une des revendications 7 à 12,
caractérisé en ce que l'unité de déplacement (31) est raccordée à un dispositif de mesure de force (43), grâce auquel la force de cintrage de l'unité de déplacement (31) peut être prédéfinie.
